(19) Europäisches Patentamt
European Patent Office
Office européen des brevets

(11) **EP 3 695 473 B1**

(12) **EUROPÄISCHE PATENTSCHRIFT**

(45) Veröffentlichungstag und Bekanntmachung des Hinweises auf die Patenterteilung:
**18.05.2022  Patentblatt 2022/20**

(21) Anmeldenummer: **18779354.2**

(22) Anmeldetag: **26.09.2018**

(51) Internationale Patentklassifikation (IPC):
*H01T 13/41* ^(2006.01)    *H01T 13/20* ^(2006.01)
*H01T 21/02* ^(2006.01)

(52) Gemeinsame Patentklassifikation (CPC):
**H01T 13/41; C04B 35/16; H01C 7/108;**
**H01T 21/02;** C04B 2235/3244; C04B 2235/3418;
C04B 2235/365

(86) Internationale Anmeldenummer:
**PCT/EP2018/076113**

(87) Internationale Veröffentlichungsnummer:
**WO 2019/072565 (18.04.2019 Gazette 2019/16)**

(54) **ZÜNDKERZEN-WIDERSTANDSELEMENT MIT ERHÖHTEM ZRSIO4-PHASENANTEIL**

SPARK PLUG RESISTANCE ELEMENT WITH INCREASED ZRSIO4 PHASE FRACTION

ÉLÉMENT RÉSISTANT DE BOUGIE D'ALLUMAGE AVEC PROPORTION DE PHASE DE ZRSIO4 AUGMENTÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.10.2017   DE 102017218032**

(43) Veröffentlichungstag der Anmeldung:
**19.08.2020   Patentblatt 2020/34**

(73) Patentinhaber: **Robert Bosch GmbH**
**70442 Stuttgart (DE)**

(72) Erfinder:
• **REINSCH, Benedikt**
**72585 Riederich (DE)**
• **ARMSTRONG, Patrick**
**96052 Bamberg (DE)**
• **NUFER, Stefan**
**70565 Stuttgart (DE)**
• **BRAUN, Hubertus**
**71272 Renningen (DE)**

(56) Entgegenhaltungen:
EP-A2- 0 874 432        DE-A1-102009 047 055
JP-A- S61 253 786        US-A1- 2016 204 579

**Beschreibung**

Stand der Technik

Die Erfindung betrifft eine Zündkerze und ein Herstellungsverfahren für eine Zündkerze gemäß der unabhängigen Ansprüche.

Heutige Zündkerzen haben zur Reduzierung des Elektrodenverschleißes und zur Vermeidung von elektromagnetischen Interferenzen (EMI) in der Zündkerze und in der Brennkraftmaschine ein Widerstandselement mit einem spezifischen Widerstand im Bereich von 1 bis 14 kΩ. Das Widerstandselement ist bei der Zündkerze typischerweise zwischen dem Anschlussbolzen und der Mittelelektrode innerhalb des Zündkerzen-Isolators angeordnet. Häufig ist das Widerstandselement eine Materialmischung aus verschiedenen leitenden Partikeln und nicht-leitenden Partikeln, wie beispielsweise Kohlenstoff oder Ruß, ZrO2 und Borosilikatglas. Der spezifische elektrische Widerstand für das Widerstandselement ergibt sich unter anderem aus der Materialzusammensetzung und der Materialverteilung.

Wie bei allen Widerständen hat auch das Widerstandselement eine maximale Stromstärke, die durch das Widerstandselement fließen kann bevor es zu einen Durchbruch des Stroms im Widerstandselement kommt, der das Widerstandselement zerstört. Diese maximale Stromstärke ist unter anderem ein Maß für die elektrische Stabilität des Widerstandselements und entscheidend für die Lebensdauer der Zündkerze.

Des Weiteren altert das Widerstandselement mit der Zeit und zunehmender Betriebsdauer, wobei sich der Widerstandswert des Widerstandselements mit der Zeit erhöht. Dadurch wird es notwendig, dass die Zündkerze mit höheren Spannungen betrieben wird, um weiter zu funktionieren. Mit immer höherer Betriebsspannung steigt die Gefahr eines Durchschlags der Spannung vom Anschlussbolzen oder von der Mittelelektrode durch den Isolator ins Gehäuse, wodurch der Isolator und die ganze Zündkerze zerstört werden. Die Langzeit-Stabilität des Widerstandswerts des Widerstandselements ist somit auch ein Maß für die elektrische Stabilität des Widerstandselements und entscheidend für die Lebensdauer der Zündkerze.

Aus der EP 0874 432 A2, der US 2016/203579 A1, der JP S61 253786 A und der DE 10 2009 047055 A1 sind Zündkerzen bekannt.

Offenbarung der Erfindung

Demgemäß ist es Aufgabe der vorliegenden Erfindung, eine Zündkerze der eingangs genannten Art mit einem verbesserten Widerstandselement, das eine hohe elektrische Stabilität hat, und ein Herstellungsverfahren für diese Zündkerze bereit zu stellen.

Diese Aufgabe wird bei der Zündkerze, aufweisend ein Gehäuse, einen im Gehäuse angeordneten Isolator, eine im Isolator angeordnete Mittelelektrode, einen im Isolator angeordneten Anschlussbolzen, ein im Isolator angeordnetes Widerstandselement, das räumlich zwischen der Mittelelektrode und dem Anschlussbolzen angeordnet ist und die Mittelelektrode mit dem Anschlussbolzen elektrisch verbindet, wobei das Widerstandselement ein Widerstandspanat enthält, wobei das Widerstandspanat aus einem Materialgemisch besteht, das unter anderem $ZrO_2$ und ein $SiO_2$ enthält, und eine an einer brennraumseitigen Stirnfläche des Gehäuses angeordnete Masseelektrode, die zusammen mit der Mittelelektrode einen Zündspalt ausbildet, erfindungsgemäß dadurch gelöst, dass das Materialgemisch des Widerstandspanats auch $ZrSiO_4$ enthält.

Während des Herstellungsverfahrens wird der Isolator zusammen mit dem darin enthaltenden Widerstandselement bzw. Widerstandspanat erhitzt. Vor diesem Heizvorgang enthält das Widerstandspanat $ZrO_2$ und $SiO_2$ und kein $ZrSiO_4$. Durch das Heizen mit einer Temperatur beispielsweise von mindestens 870°C wird eine Transformation vom $ZrO_2$ zusammen mit dem $SiO_2$ zu $ZrSiO_4$ initiiert. Untersuchungen der Anmeldering haben gezeigt, dass Zündkerzen mit einem Widerstandspanat, das $ZrSiO_4$ enthält, eine wesentlich höhere Widerstandsstabilität während des Betriebs der Zündkerze haben. Bei Zündkerzen mit einem $ZrSiO_4$-freien Widerstandspanat verändert sich nach wenigen 100 Betriebsstunden der Widerstand deutlich, so dass für die Aufrechterhaltung der Zündkerzen-Funktion immer höhere Spannungen an die Zündkerze angeschlossen werden müssen, wodurch die Gefahr wiederum steigt, dass die Spannung vom Anschlussbolzen oder von der Mittelelektrode durch den Isolator ins Gehäuse durchschlägt und die Zündkerze zerstört.

Dieses Problem hat die erfindungsgemäße Zündkerze nicht, da aufgrund des $ZrSiO_4$ im Widerstandspanat der Widerstand des Widerstandspanat wesentlich stabiler ist und auch bei mehreren 100 Betriebsstunden sich nur leicht verändert, wodurch die Zündkerze lange mit einer normalen Spannung betrieben werden kann. Für die Untersuchungen wurde die erfindungsgemäße Zündkerze bei einer Spannung von 30 kV, einer Temperatur von 250°C und einer Pulsfrequenz von 100 Hz betrieben.

Weitere vorteilhafte Ausgestaltungen sind Gegenstand der Unteransprüche.

Erfindungsgemäß ist vorgesehen, dass eine Transformationsrate q mindestens 40 % beträgt, wobei

$$q = \frac{w(ZrSiO_4)}{(w(ZrSiO_4) + w(ZrO_2))}$$

mit w(X) der Anteil vom Material X in Gew.-% im Widerstandspanat ist, wobei X $ZrSiO_4$ oder $ZrO_2$ ist.

Besonders vorteilhaft ist es, wenn die Transformationsrate q mindestens 50% beträgt. Die Untersuchungen haben ergeben, dass bei 50-55% eine Sättigung der Transformationsrate liegt und auch durch eine höhere Temperatur oder einer längere Heizdauer die Transformationsrate sich nicht weiter erhöht.

Alternative oder zusätzlich ist es vorgesehen, dass eine relative Widerstandsänderung des Widerstandpanats nach mindestens 300 Betriebsstunden kleiner ist als 50 %, vorzugsweise kleiner als 35%. Idealerweise ist die relative Widerstandsänderung bei mindestens 500 Betriebsstunden kleiner als 50%.

Bei einer Weiterbildung ist das Widerstandselement ein Schichtsystem, das das Widerstandpanat und mindestens ein Kontaktpanat aufweist. Dabei ist das mindestens eine Kontaktpanat räumlich zwischen dem Anschlussbolzen und dem Widerstandpanat oder zwischen der Mittelelektrode und dem Widerstandpanat angeordnet, oder wenn es zwei Kontaktpanate gib, sind ein erstes Kontaktpanat räumlich zwischen dem Anschlussbolzen und dem Widerstandpanat und ein zweites Kontaktpanat räumlich zwischen dem Widerstandspanat und der Mittelelektrode angeordnet.

Ein weiterer Aspekt der Erfindung betrifft ein Herstellungsverfahren für eine Zündkerze, wie beispielsweise die erfindungsgemäße Zündkerze, das folgende Schritte umfasst:

- Bereitstellen eines Isolators
- Einfüllen eines Materialgemisches, das dazu eingerichtet ist ein Widerstandspanat auszubilden, in den Isolator, wobei das Materialgemisch $ZrO_2$ und $SiO_2$ enthält,
- Erhitzen des Isolators und des darin befindlichen Materialgemisches auf eine Temperatur T von mindestens 870°C, so dass dabei im Materialgemisch $ZrO_2$ und $SiO_2$ mindestens teilweise zu $ZrSiO_4$ reagieren.

Erfindungsgemäß ist vorgesehen, dass das Materialgemisch für das Widerstandspanat solange erhitzt wird bis sich eine Transformationsrate q, die mindestens 40 % beträgt, eingestellt hat. Wobei die Transformationsrate q sich aus der Formel:

$$q = \frac{w(ZrSiO_4)}{(w(ZrSiO_4) + w(ZrO_2))}$$

mit w(X) der Anteil vom Material X in Gew.-% im Widerstandspanat ergibt, wobei X $ZrSiO_4$ oder $ZrO_2$ ist.

Die Untersuchungen habe gezeigt, dass vorteilhafterweise die Temperatur T im Bereich von 870°C bis 965°C liegt. Mit niedrigeren Temperaturen als 870 °C konnte auch bei Heizdauern von mehr als 30 min kein $ZrSiO_4$ erzeugt werden. Höhere Temperaturen als 965 °C haben keinen zusätzlichen vorteilhaften Effekt auf die Transformation. Bei 965°C wurde bereits innerhalb von 30 min eine Sättigung der Transformationsrate q erreicht.

Bei einer Weiterbildung des erfindungsgemäßen Herstellungsverfahrens wird das Widerstandspanat für eine Zeit von mindestens 15 min und insbesondere maximal 60 min auf der Temperatur T von mindestens 870°C gehalten, wobei je höher die Temperatur T ist umso kleiner kann die Zeit sein. Dadurch ergibt sich die Freiheit entweder für die Transformation das Widerstandspanat auf einer niedrigen Temperatur länger zu heizen und die Transformation langsam ablaufen zu lassen, wenn andere Komponenten im oder am Isolator oder der Zündkerze nicht zu hoch geheizt werden dürfen, oder die Transformation zu beschleunigen, in dem man für eine kürzere Zeit auf eine höhere Temperatur heizt.

Zeichnung

Figur 1 zeigt ein Beispiel für eine Zündkerze

Figur 2 zeigt die Transformationsrate q in Abhängigkeit der Temperatur T für eine konstante Heizzeit t=30 min der Probe.

Figur 3 zeigt die Transformationsrate q in Abhängigkeit der Heizzeit t für die Temperaturen T=890°C und T=950°C im Vergleich

Figur 4 den Widerstand von verschiedenen Proben nach verschieden Dauerlauftestzeiten

Figur 5 zeigt schematisch das Herstellungsverfahren für die erfindungsgemäße Zündkerze

Beschreibung des Ausführungsbeispiels

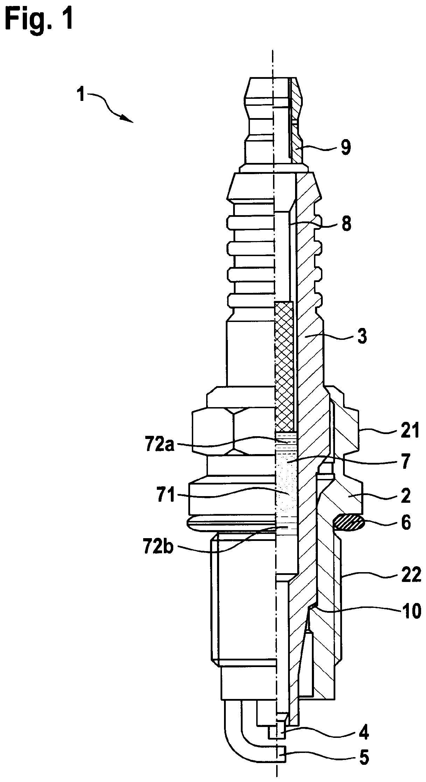

Figur 1 zeigt in einer halb-geschnittenen Ansicht eine Zündkerze 1. Die Zündkerze 1 umfasst ein Gehäuse 2. In das Gehäuse 2 ist ein Isolator 3 eingesetzt. Das Gehäuse 2 und der Isolator 3 weisen jeweils entlang ihrer Längsachse X eine Bohrung auf. Die Längsachse des Gehäuses 2, die Längsachse des Isolators 3 und die Längsachse der Zündkerze 1 fallen zusammen. In den Isolator 3 ist eine Mittelelektrode 4 eingesetzt. Des Weiteren erstreckt sich in den Isolator 3 ein Anschlussbolzen 8. Am Anschlussbolzen 8 ist eine Anschlussmutter 9 angeordnet, über die die Zündkerze 1 mit einer hier nicht dargestellten Spannungsquelle elektrisch kontaktierbar ist. Die Anschlussmutter 9 bildet das Brennraum-abgewandte Ende der Zündkerze 1.

Zwischen der Mittelelektrode 4 und dem Anschlussbolzen 8 befindet sich im Isolator 3 ein Widerstandselement 7, auch Panat genannt. Das Widerstandselement 7 verbindet die Mittelelektrode 4 elektrisch leitend mit dem Anschlussbolzen 8. Das Widerstandselement 7 ist beispielsweise als Schichtsystem aus einem ersten Kontaktpanat 72a, einem Widerstandspanat 71 und einem zweiten Kontaktpanat 72b aufgebaut. Die Schichten des Widerstandselements 7 unterscheiden sich durch ihre Materialzusammensetzung und dem daraus resultierenden elektrischen Widerstand. Das erste Kontaktpanat 72a und das zweite Kontaktpanat 72b können einen unterschiedlichen elektrischen Widerstand oder einen gleichen elektrischen Widerstand aufweisen. Das Widerstandselement 7 kann auch nur eine Schicht Widerstandpanat oder mehrere verschiedene Schichten Widerstandpanat mit unterschiedlichen Materialzusammensetzungen und Widerständen aufweisen.

Der Isolator 3 liegt mit einer Schulter auf einem an der Gehäuse-Innenseite ausgebildeten Gehäuse-Sitz auf. Zur Abdichtung des Luftspalts zwischen Gehäuse-Innenseite und Isolator 3 ist zwischen der Isolator-Schulter und dem Gehäuse-Sitz eine Innendichtung 10 angeordnet, die beim Einspannen des Isolators 3 im Gehäuse 2 plastisch verformt wird und dadurch den Luftspalt abdichtet.

Am Gehäuse 2 ist auf dessen brennraumseitigen Stirnfläche eine Masseelektrode 5 elektrisch leitend angeordnet. Die Masseelektrode 5 und die Mittelelektrode 4 sind so zueinander angeordnet, dass sich zwischen ihnen ein Zündspalt ausbildet, bei dem der Zündfunken erzeugt wird.

Das Gehäuse 2 weist einen Schaft auf. An diesem Schaft sind ein Mehrkant 21, ein Schrumpfeinstich und ein Gewinde 22 ausgebildet. Das Gewinde 22 dient zum Einschrauben der Zündkerze 1 in eine Brennkraftmaschine. Zwischen dem Gewinde 22 und dem Mehrkant 21 ist ein äußeres Dichtelement 6 angeordnet. Das äußere Dichtelement 6 ist in diesem Ausführungsbeispiel als Faltdichtung ausgestaltet. Alternative kann das äußere Dichtelement 6 auch eine Volldichtung sein.

In Tabelle 1 sind die Ergebnisse der Untersuchungen zusammengefasst. Jede Probe entspricht dabei einer Zündkerze. Vor dem Heizen haben die Widerstandpanate aller Proben die gleiche Materialzusammensetzung. Es wäre auch möglich die Transformation-Untersuchungen an Proben durchzuführen, die nur dem Widerstandselement bzw. dem Widerstandpanat entsprechen, d.h. die entsprechende Materialzusammensetzung haben. Das Widerstandpanat enthält im Ausgangszustand, d.h. vor einem Erhitzen und somit vor einer möglichen Transformation, ZrO2 und SiO$_2$-haltiges Glas. Weitere Bestandteile des Glases sind beispielsweise B$_2$O$_3$, CaO und Li$_2$O. Weitere Bestandteile der Materialzusammensetzung des Widerstandpanats sind beispielsweise Kohlenstoffe oder Keramik-Partikel wie Al$_2$O$_3$, oder TiO$_2$.

Jede Probe wurde für eine bestimmte Heizzeit t auf eine bestimmte Temperatur T erhitzt. Anschließend wurde mittels XRD-Rietveld-Analyse die Anteile der verschiedenen Materialien, ZrO$_2$ und ZrSiO$_4$, bestimmt. Daraus wiederum wurde die Transformationsrate q bestimmt. Die Transformationsrate q berechnet sich nach der folgenden Formel:

$$q = \frac{w(ZrSiO_4)}{(w(ZrSiO_4) + w(ZrO_2))},$$

wobei w(X) den Anteil des Material X in Gew.-% nach der Transformation ist, dabei ist X ZrSiO$_4$ oder ZrO$_2$.

Tabelle 1:

| Proben Nr. | $T_{Probe}$ [°C] | $t_{Heizen}$ [min] | q [%] |
|---|---|---|---|
| H1 | 860 | 30 | 0 |
| H6 | 890 | 10 | 0 |
| H7 | 890 | 15 | 0 |
| H8 | 890 | 20 | 2 |
| H2 | 890 | 30 | 27 |
| H9 | 890 | 30 | 27 |
| H10 | 890 | 60 | 51 |
| H11 | 890 | 120 | 55 |
| H3 | 920 | 30 | 50 |
| H12 | 950 | 5 | 0 |
| H13 | 950 | 10 | 5 |
| H14 | 950 | 20 | 49 |
| H4 | 950 | 30 | 55 |
| H5 | 965 | 30 | 52 |

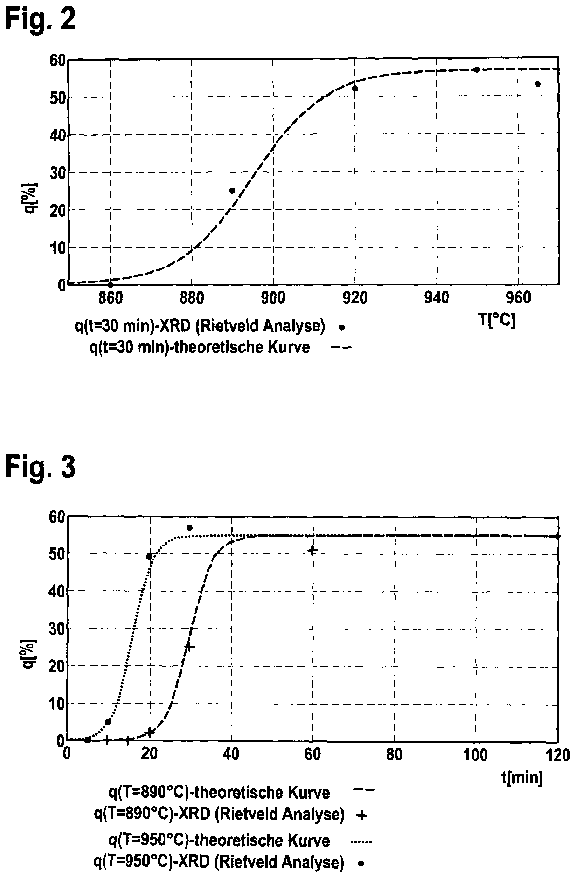

Die Ergebnisse dieser Tabelle ist die Datenbasis für die folgenden Diagramme in Figur 2 und Figur 3.

In Figur 2 ist die Transformationsrate q in % gegen die Temperatur T in °C aufgetragen. Jeder Datenpunkt steht dabei für eine Probe, die für 30 min auf die jeweilige Temperatur T erhitzt wurde. Die gestrichelte Linie ist ein theoretischer Kurvenverlauf, der sich aus den Messdaten mittels einer einfachen Fitfunktion $q(T) = q_{sat} * (e^{(-T+T_0)})^{-1}$, mit der Ofentemperatur $T$, dem Sättigungswert der Transformationsrate $q_{sat}$ und einem Fitparameter $T_0$, ergibt. Aus diesem Diagramm lässt sich erkennen, dass für eine Heizzeit t von 30 min die Transformationsrate q für eine Temperatur ab ca. 920 °C in eine Sättigung von 50-55% geht.

In Figur 3 ist ein Diagramm gezeigt, bei dem die Transformationsrate q in % für zwei Proben in Abhängigkeit gegen die Heizzeit t aufgetragen ist. Die erste Probe (Kreise) wurde auf 950°C geheizt. Die zweite Probe (Kreuze) wurde auf 890°C geheizt. Für beide Proben wurde nach verschiedenen Zeiten die Transformationsrate q, wie oben beschrieben, bestimmt. Die gestrichelten Linien sind wieder theoretische Kurvenverläufe, die sich aus den jeweiligen Messdaten mittels einer einfachen Fitfunktion $q(t) = q_{sat} * (e^{(-t+t_0)})^{-1}$, mit der Heizzeit t, dem Sättigungswert der Transformationsrate $q_{sat}$ und einem Fitparameter to, ergeben. Aus diesem Diagramm entnimmt man ebenfalls das Ergebnis, dass die Transformationsrate q bei einem Wert von 50-55% in Sättigung geht. Zusätzlich zeigt das Diagramm auch, dass diese Sättigung bei höherer Temperatur zeitlich schneller erreicht wird.

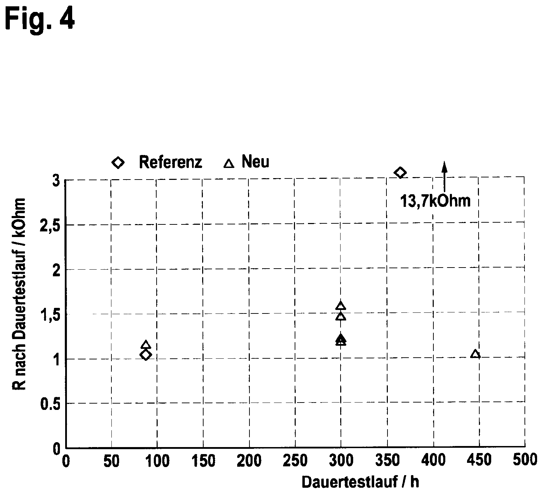

In Figur 4 zeigt im Vergleich den Widerstand von Zündkerzen nach bestimmten Betriebsdauern t. Alle Zündkerzen hatten vor Start des Dauertestlaufs einen Anfangswiderstand (Datenpunkt Kreis) von $R(t=0)=1,5k\Omega$.

Die Referenz-Zündkerze (Datenpunkt Viereck) und ihr Widerstandselement wurden entsprechend der Probe H1 aus der Tabelle 1 behandelt und haben eine Transformationsrate q=0%. Nach über 350 Betriebsstunden hatte die Referenz-Zündkerze einen Widerstand von $R(350h)=13,7$ k$\Omega$, dies entspricht einer relativen Widerstandsänderung rW von 813 %.

Die relative Widerstandsänderung (rW) wird berechnet mit:

$$rW = \frac{|R(t)-R(t=0)|}{R(t=0)},$$

wobei R(t=0) der Widerstand der Zündkerze vorm Beginn des Dauertestlaufs und R(t) der Widerstand der gleichen Zündkerze nach der Betriebsdauer t.

Die neuen Zündkerzen (Datenpunkt Dreieck) und ihre Widerstandselemente wurden entsprechend der Probe H3 aus der Tabelle 1 behandelt und haben eine Transformationsrate q=50%. Jeder Datenpunkt ist eine Zündkerze, für die der Test und eine anschließende Bestimmung des Widerstandes durchgeführt wurden. Die relative Widerstandsänderung für alle dieser neuen Zündkerzen liegt bei kleiner 50%. Die größte relative Widerstandsänderung mit rW= 33% ergibt sich für die neue Zündkerze, die nach fast 450 Betriebsstunden einen Widerstand von ca. 1 kΩ hat.

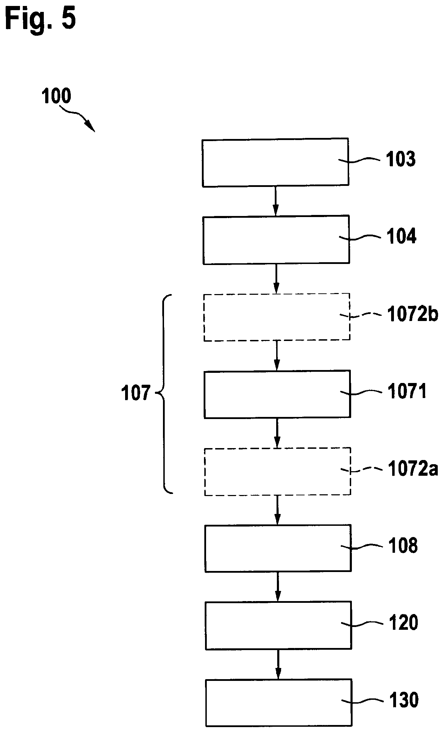

In Figur 5 ist schematisch das Herstellungsverfahren 100 für eine Zündkerze dargestellt, wobei die einzelnen Schritte zur Herstellung der einzelnen Komponenten der Zündkerze 1, wie beispielsweise Herstellung des Isolators 3 oder Herstellung und zusammenmischen des Materials für das Widerstandselements 7 hier nicht dargestellt sind.

In einem ersten Schritt 103 wird der Isolator 3 der Zündkerze bereitgestellt. In einem zweiten Schritt 104 wird die Mittelelektrode in den Isolator gesteckt. Im dritten Schritt 107 wird das Material für das Widerstandselement 7 in den Isolator eingefüllt. Optional kann dieser Schritt 107 aus drei Teilschritten bestehen: Einfüllen Kontaktpanat 1072b, einfüllen Widerstandspanat 1071, einfüllen zweites Kontaktpanat 1072a, wobei nach jedem Einfüllen ein Verdichten als Zwischenschritt erfolgen kann. In einem nachfolgenden Schritt 108 wird der Anschlussbolzen 8 in den Isolator eingesteckt. Im anschließenden Schritt 120 werden der Anschlussbolzen 8 und der Isolator 3 miteinander verpresst und gleichzeitig erhitzt. Das Material des Widerstandselements 7 wird dabei mit erhitzt, sodass in diesem Schritt 108 die Transformation von $ZrO_2$ und $SiO_2$ zu $ZrSiO_4$ im Widerstandselement 7 bzw. im Widerstandspanat 71 stattfindet. Die Temperatur beträgt mindestens 870°C. Anschließend erfolgen weitere Schritte 130 bei denen der Isolator mit dem Gehäuse zusammengesteckt und verbunden wird, sowie die Elektroden zu einander ausgerichtet werden.

**Patentansprüche**

1. Zündkerze (1), aufweisend

   • ein Gehäuse (2),
   • einen im Gehäuse (2) angeordneten Isolator (3),
   • eine im Isolator (3) angeordnete Mittelelektrode (4),
   • einen im Isolator (3) angeordneten Anschlussbolzen (8),
   • ein im Isolator (3) angeordnetes Widerstandselement (7), das räumlich zwischen der Mittelelektrode (4) und dem Anschlussbolzen (8) angeordnet ist und die Mittelelektrode (4) mit dem Anschlussbolzen (8) elektrisch verbindet, wobei das Widerstandselement (7) ein Widerstandspanat (71) enthält, wobei das Widerstandspanat (71) aus einem Materialgemisch besteht, das $ZrO_2$ und $SiO_2$ enthält, und
   • eine an einer brennraumseitigen Stirnfläche des Gehäuses (2) angeordnete Masseelektrode (5), die zusammen mit der Mittelelektrode (4) einen Zündspalt ausbildet,

   wobei das Materialgemisch des Widerstandspanats (71) auch $ZrSiO_4$ enthält, **dadurch gekennzeichnet, dass** eine Transformationsrate q mindestens 40 % beträgt, wobei

   $$q = \frac{w(ZrSiO_4)}{(w(ZrSiO_4)+w(ZrO_2))},$$

   mit w(X) der Anteil vom Material X in Gew.-% im Widerstandspanat (71) ist.

2. Zündkerze (1) nach Anspruch 1, **dadurch gekennzeichnet, dass** das Widerstandspanat (71) nach 300 Betriebsstunden eine relative Widerstandsänderung von kleiner 50 % hat.

3. Verfahren zur Herstellung (100) einer Zündkerze, insbesondere nach Anspruch 1 oder 2, umfassend die Schritte:

   • Bereitstellen eines Isolators (103)
   • Einfüllen eines Materialgemisches (107), das dazu eingerichtet ist ein Widerstandspanat (71) auszubilden, in den Isolator (3), wobei das Materialgemisch $ZrO_2$ und $SiO_2$ enthält,
   • Erhitzen (120) des Isolators (3) und des darin befindlichen Materialgemisches auf eine Temperatur T von mindestens 870°C, so dass dabei im Materialgemisch $ZrO_2$ und $SiO_2$ mindestens teilweise zu $ZrSiO_4$ reagieren;

**dadurch gekennzeichnet, dass** eine Transformationsrate q mindestens 40 % beträgt, wobei

$$q = \frac{w(ZrSiO_4)}{(w(ZrSiO_4)+w(ZrO_2))},$$

w(X) der Anteil vom Material X in Gew.-% im Widerstandspanat (71) ist.

4. Verfahren (100) nach Anspruch 3, **dadurch gekennzeichnet, dass** die Temperatur T im Bereich von 870°C bis 965°C liegt.

5. Verfahren (100) nach einem der vorherigen Ansprüche 3 oder 4, **dadurch gekennzeichnet, dass** die Temperatur T für eine Zeit von mindestens 15 min und insbesondere maximal 60 min gehalten wird, wobei je höher die Temperatur T ist umso kleiner die Zeit sein kann.

**Claims**

1. Spark plug (1), comprising

    • a housing (2),
    • an insulator (3), which is arranged in the housing (2),
    • a central electrode (4), which is arranged in the insulator (3),
    • a connection bolt (8), which is arranged in the insulator (3),
    • a resistor element (7), which is arranged in the insulator (3), is arranged spatially between the central electrode (4) and the connection bolt (8) and electrically connects the central electrode (4) to the connection bolt (8), wherein the resistor element (7) contains a resistive compound (71), wherein the resistive compound (71) consists of a material mixture which contains $ZrO_2$ and $SiO_2$, and
    • an earth electrode (5), which is arranged on an end surface, facing toward the combustion chamber, of the housing (2) and, together with the central electrode (4), forms a spark gap,

wherein the material mixture of the resistive compound (71) also contains $ZrSiO_4$, **characterized in that** a conversion ratio q is at least 40%, where

$$q = \frac{w(ZrSiO_4)}{(w(ZrSiO_4)+w(ZrO_2))},$$

with w(X) being the proportion of the material X in wt% in the resistive compound (71).

2. Spark plug (1) according to Claim 1, **characterized in that** the resistive compound (71) has a relative change in resistance of less than 50% after 300 operating hours.

3. Method for producing (100) a spark plug, in particular according to either of Claims 1 and 2, comprising the steps of:

    • providing an insulator (103),
    • filling the insulator (3) with a material mixture (107) which is designed to form a resistive compound (71), wherein the material mixture contains $ZrO_2$ and $SiO_2$,
    • heating (120) the insulator (3) and the material mixture contained therein to a temperature T of at least 870°C, so that $ZrO_2$ and $SiO_2$ in the material mixture react at least partially to form $ZrSiO_4$,

**characterized in that** a conversion ratio q is at least 40%, where

$$q = \frac{w(ZrSiO_4)}{(w(ZrSiO_4)+w(ZrO_2))},$$

with w(X) being the proportion of the material X in wt% in the resistive compound (71).

4. Method (100) according to Claim 3, **characterized in that** the temperature T lies in the range of from 870°C to 965°C.

5. Method (100) according to either of the preceding Claims 3 and 4, **characterized in that** the temperature T is maintained for a time of at least 15 min, and in particular at most 60 min, wherein the higher the temperature T, the shorter the time can be.

**Revendications**

1. Bougie d'allumage (1) comportant

    • un boîtier (2),
    • un isolateur (3) disposé dans le boîtier (2),
    • une électrode centrale (4) disposée dans l'isolateur (3),
    • un boulon de raccordement (8) disposé dans l'isolateur (3),

• un élément résistif (7) qui est disposé dans l'isolateur (3) et qui est disposé spatialement entre l'électrode centrale (4) et le boulon de raccordement (8) et qui relie électriquement l'électrode centrale (4) au boulon de raccordement (8), l'élément résistif (7) contenant une panure résistive (71), la panure résistive (71) comprenant un mélange de matériaux contenant du $ZrO_2$ et du $SiO_2$, et

• une électrode de masse (5) disposée sur une surface frontale du boîtier (2), côté chambre de combustion, qui forme avec l'électrode centrale (4) une fente d'allumage,

le mélange de matériaux de la panure résistive (71) contenant également du $ZrSiO_4$, **caractérisée en ce qu'**un taux de transformation q est d'au moins 40 %, avec

$$q = \frac{w(ZrSiO_4)}{(w(ZrSiO_4)+w(ZrO_2))}$$

où w(X) est la proportion de matériau X en % en poids dans la panure résistive (71).

2. Bougie d'allumage (1) selon la revendication 1, **caractérisée en ce que** la panure résistive (71) présente une variation de résistance relative inférieure à 50 % après 300 heures de fonctionnement.

3. Procédé de fabrication (100) d'une bougie d'allumage, notamment selon la revendication 1 ou 2, ledit procédé comprenant les étapes suivantes :

   • fournir un isolateur (103)
   • remplir l'isolateur (3) avec un mélange de matériaux (107), qui est conçu pour former une panure résistive (71), le mélange de matériaux contenant du $ZrO_2$ et du $SiO_2$,
   • chauffer (120) l'isolateur (3) et le mélange de matériaux qu'il contient à une température T d'au moins 870 °C de sorte que dans le mélange de matériaux le $ZrO_2$ et le $SiO_2$ réagissent au moins partiellement pour former du $ZrSiO_4$ ;

   **caractérisé en ce que** le taux de transformation q est d'au moins 40 %, où

$$q = \frac{w(ZrSiO_4)}{(w(ZrSiO_4)+w(ZrO_2))}$$

où w(X) est la proportion de matériau X en % en poids dans la panure résistive (71).

4. Procédé (100) selon la revendication 3, **caractérisé en ce que** la température T est comprise entre 870 °C et 965 °C.

5. Procédé (100) selon l'une des revendications précédentes 3 ou 4, **caractérisé en ce que** la température T est maintenue pendant une durée d'au moins 15 minutes et notamment au maximum de 60 minutes, la durée pouvant être d'autant plus courte que la température T est élevée.

# Fig. 1

1

9

8

3

72a

21

7

71

2

6

72b

22

10

4

5

## Fig. 2

q(t=30 min)-XRD (Rietveld Analyse)  •
q(t=30 min)-theoretische Kurve    — —

## Fig. 3

q(T=890°C)-theoretische Kurve    — —
q(T=890°C)-XRD (Rietveld Analyse)  +
q(T=950°C)-theoretische Kurve    ······
q(T=950°C)-XRD (Rietveld Analyse)  •

# Fig. 4

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0874432 A2
- US 2016203579 A1
- JP S61253786 A
- DE 102009047055 A1